Europäisches Patentamt

European Patent Office

Office européen des brevets

(11) Numéro de publication : **0 091 348**
**B1**

(12) **FASCICULE DE BREVET EUROPÉEN**

(45) Date de publication du fascicule du brevet :
03.01.90

(21) Numéro de dépôt : 83400619.9

(22) Date de dépôt : 24.03.83

(51) Int. Cl.⁵ : **B 60 T 13/14, F 15 B 13/02**

(54) **Valve de régulation pour alimentation simultanée de systèmes hydrauliques à centre fermé et à centre ouvert.**

(30) Priorité : 30.03.82 FR 8205408

(43) Date de publication de la demande :
12.10.83 Bulletin 83/41

(45) Mention de la délivrance du brevet :
03.01.90 Bulletin 90/01

(84) Etats contractants désignés :
DE GB IT SE

(56) Documents cités :
FR-A- 1 561 875
FR-A- 2 136 857
FR-A- 2 228 998
GB-A- 589 095
US-A- 4 192 337

(73) Titulaire : BENDIX France
126, rue de Stalingrad
F-93700 Drancy (FR)

(72) Inventeur : Tanguy, Christian
34 bis, Avenue Gaston Bourry
F-95740 Frepillon (FR)

(74) Mandataire : Timoney, Ian Charles Craig et al
BENDIX FRANCE Division Technique Service Brevets
Bendix Europe 126, rue de Stalingrad
F-93700 Drancy (FR)

## Description

L'invention concerne une valve de régulation pour systèmes hydrauliques à centre fermé et à centre ouvert alimentés en commun.

Certains véhicules automobiles sont munis de dispositifs d'assistance hydraulique pour le freinage, la suspension et la direction. De manière classique, les dispositifs d'assistance pour le freinage et la suspension sont à centre fermé, c'est à dire que leur alimentation s'effectue à pression sensiblement constante et débit variable ; pour ce faire, on utilise en général un accumulateur hydraulique entre le générateur de pression et les dispositifs en question. Par contre, les dispositifs d'assistance pour la direction sont souvent à centre ouvert, c'est à dire que leur alimentation s'effectue à débit sensiblement constant et pression variable ; pour ce faire, on utilise en général un régulateur de débit propre entre le générateur de pression et les dispositifs en question.

Pour des raisons d'économie, on cherche naturellement à utiliser un générateur de pression unique capable de délivrer un débit de fluide suffisant pour le fonctionnement simultané de tous les dispositifs précités et sous la plus forte pression nécessaire.

Lors du démarrage du véhicule, l'accumulateur d'alimentation des dispositifs à centre fermé est en général déchargé et il est nécessaire d'attendre un certain temps de fonctionnement du moteur (qui est utilisé pour entraîner le générateur de pression) pour que l'accumulateur, soit correctement chargé et que les dispositifs en question deviennent opérationnels. Si un régulateur de débit classique dessert parallèlement le dispositif à centre ouvert, durant la charge de l'accumulateur le régulateur de débit dérive un débit de fluide important, ce qui augmente le temps de charge de l'accumulateur. Pendant ce temps, les dispositifs d'assistance au freinage et à la suspension ne peuvent fonctionner à leur pleine efficacité, ce qui peut présenter un danger, ou à tout le moins, une gêne pour le conducteur.

Pour obvier à cet inconvénient, le document FR-A-2 228 998 propose une valve de commutation à fonctionnement hydraulique commandée par la pression régnant dans l'accumulateur du dispositif à centre fermé et grâce à laquelle l'intégralité du débit de la pompe est envoyée soit au dispositif à centre ouvert soit au dispositif à centre fermé.

Pour ce faire, la communication entre la pompe et le dispositif à centre ouvert peut être obturé par un élément de fermeture, lequel est repoussé dans le sens de la fermeture pas des moyens élastiques ; une chambre située derrière la surface soumise à la pression de l'élément de fermeture, à l'opposé du sens de fermeture, communique par l'intermédiaire d'un raccord de faible section transversale avec un orifice pour le passage du liquide dans la pompe ; cette chambre peut être mise en communication à son tour avec la conduite de retour par l'intermédiaire d'une soupape pilote en fonction de la pression qui règne dans l'accumulateur.

La valve décrite dans ce document assure une sécurité du véhicule en ce que le système de freinage est alimenté en priorité. Toutefois, pendant la mise en charge de l'accumulateur la direction n'est plus du tout assistée ce qui est désagréable en soi et peut présenter un danger lorsque cela se produit pendant que le véhicule ainsi équipé roule.

La présente invention a pour but d'obvier à cet inconvénient puisque le régulateur de débit qu'elle propose permet d'assurer en permanence une alimentation régulée du dispositif à centre ouvert tout en permettant une charge ou une recharge rapide de l'accumulateur.

Le régulateur selon l'invention est donc prévu pour être disposé dans un circuit hydraulique comprenant un réservoir, un générateur de pression dont le conduit de refoulement est connecté, d'une part, à l'entrée d'un conjoncteur-disjoncteur dont une première sortie relie en permanence un dispositif d'assistance à centre fermé comprenant un accumulateur de pression au générateur de pression et dont une seconde sortie est en communication avec le générateur de pression lorsque la pression régnant dans l'accumulateur est supérieure à une limite basse déterminée, et, d'autre part, à une entrée du régulateur de débit dont une sortie est prévue pour être reliée à un dispositif d'assistance à centre ouvert.

Selon la présente invention, le régulateur de débit comprend un boîtier dans lequel sont ménagées en combinaison trois cavités spécifiques telles que décrites dans la revendication principale.

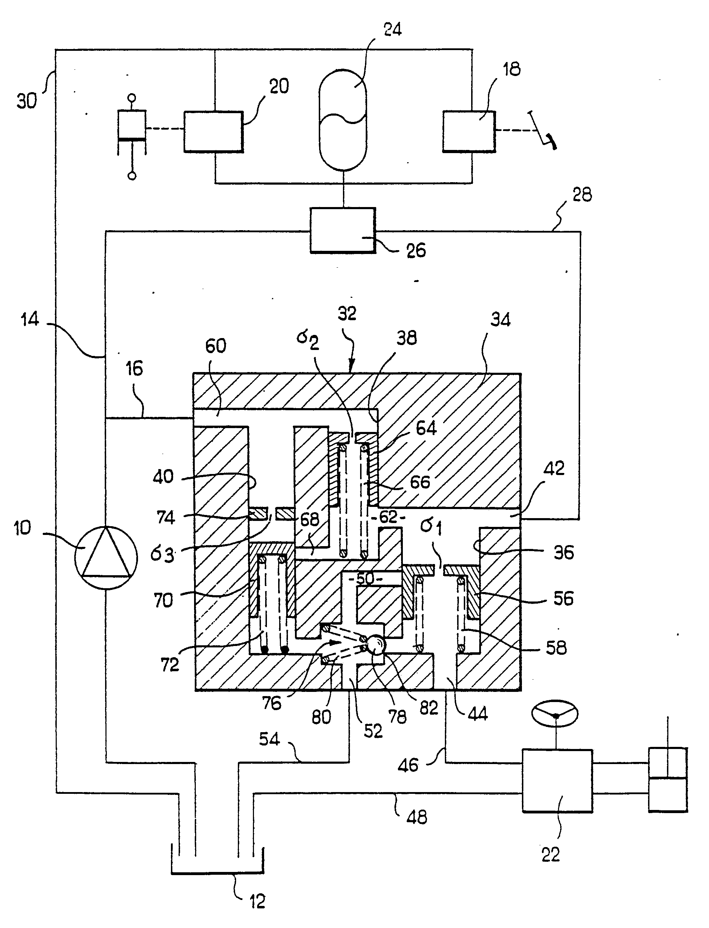

L'invention sera maintenant décrite en se référant à la Figure unique du dessin annexé qui est une représentation schématique d'un ensemble de dispositifs d'assistance pour véhicule automobile, incorporant un régulateur de débit selon l'invention, lequel est représenté en coupe.

L'ensemble de dispositifs d'assistance comprend un générateur de pression, ou pompe 10, qui puise du liquide dans un réservoir 12 pour le refouler dans des conduits 14 et 16, le premier 14 desservant des dispositifs d'assistance à la suspension 20, et le second 16 desservant un dispositif d'assistance à centre ouvert constitué par un dispositif d'assistance à la direction 22.

En dérivation sur l'alimentation des dispositifs 18 et 20 est prévu un accumulateur 24 dont la charge est régulée par un conjoncteur-disjoncteur 26, lui-même relié au réservoir 12 via um conduit 28.

Le conjoncteur-disjoncteur est réalisé de telle sorte que tant que la pression régnant dans l'accumulateur 24 est inférieure à une limite haute, appelée HPmax, prédéterminée, il occupe une position dite de conjonction pour laquelle il établit une communication entre le conduit 14 et l'accumulateur 24 tout en bloquant la communication entre le conduit 14 et le conduit 28. Par contre, lorsque la pression est supérieure à une limite basse, appelée HPmin, prédéterminée, le conjoncteur-disjoncteur occupe une position de disjonction pour laquelle il établit une communication entre les deux conduits 14 et 28 tout en maintenant une communication entre le conduit 14 et l'accumulateur 24. Un clapet antiretour empêche l'écoulement en sens inverse.

En outre, les deux dispositifs 18 et 20 sont reliés au réservoir 12 via un collecteur 30.

On ne décrira pas en détail les dispositifs 18 et 20 si ce n'est pour mentionner que ces dispositifs sont traversés par un débit de fluide variable en fonction de leurs conditions de fonctionnement, ce débit étant très faible au repos, sous une pression sensiblement constante, comprise entre les limites HPmax et HPmin imposées par le conjoncteur-disjoncteur 26.

De son côté, le dispositif d'assistance à la direction 22 est alimenté via une régulateur de débit 32 dont le rôle et la structure vont être maintenant décrits.

Le régulateur 32 comprend un boîtier 34 dans lequel sont définies trois cavités 36, 38 et 40.

La première, 36, communique à une extrémité dite extrémité supérieure avec un orifice 42 relié au conduit 28 et à l'autre extrémité dite extrémité inférieure avec un orifice 44 relié à un conduit 46 qui alimente le dispositif d'assistance 22.

De manière classique, ce dernier est relié au réservoir 12 par un conduit 48.

Dans le régulateur, un passage 50 débouche dans la paroi de la cavité 36 et aboutit à un orifice d'échappement 52, relié par un conduit 54 au réservoir 12. Enfin, cette cavité abrite un tiroir de régulateur principal 56 percé d'un étranglement de section $\sigma_1$, référence sous laquelle il sera désigné par la suite ; un ressort 58 sollicite le tiroir 56 en éloignement de l'orifice 44 jusque dans une position de repos dans laquelle le tiroir 56 masque le passage 50.

La seconde cavité 38 communique à une extrémité dite extrémité supérieure avec un orifice d'entrée 60 relié au conduit 16 de refoulement de la pompe 10, et un passage 62 débouche dans la paroi de la cavité 38 et aboutit à l'extrémité supérieure de la cavité 36. Cette cavité abrite un tiroir de régulateur annexe 64 percé d'un étranglement de section $\sigma_2$, référence sous laquelle il sera désigné par la suite ; un ressort 66 sollicite le tiroir 64 en direction de l'extrémité supérieure de la cavité 38 jusque dans une position de repos dans laquelle le tiroir 64 démasque le passage 62.

La troisième cavité 40 communique à une extrémité, dite extrémité supérieure, avec l'orifice 60 et l'autre extrémité, dite extrémité inférieure, avec l'orifice 52. Un passage 68 débouche dans la paroi de la cavité 40 et aboutit à l'extrémité inférieure de la cavité 38.

La cavité 40 abrite un tiroir de valve 70 sollicité par une ressort 72 en direction de l'extrémité supérieure de la cavité jusque dans une position de repos dans laquelle le tiroir 70 masque le passage 68. Une bague fixe 74 est montée dans la cavité 40 entre son extrémité supérieure et le tiroir 70. Cette bague est percée d'un étranglement $\sigma_3$, référence sous laquelle il sera désigné par la suite.

Afin un clapet de sécurité 76 est monté entre l'extrémité inférieure de la cavité 36 et l'orifice 52. Ce clapet comprend un élément de fermeture réalisé sous la forme d'une bille 78 sollicitée par un ressort 80 en direction d'un siège 82 défini dans le boîtier du côté de la cavité 36.

Le fonctionnement de l'installation est le suivant :

Lorsque le véhicule est à l'arrêt, les fuites provoquent une décharge de l'accumulateur 24 et, en l'absence de pression dans les divers conduits, les éléments du régulateur occupent les positions de repos telles que représentées à la figure.

Après démarrage du véhicule, la pompe 10 commence à refouler du fluide sous pression dans les conduits 14 et 16.

Naturellement, au début, la pression P reste faible en raison de la charge de l'accumulateur 24, le conjoncteur-disjoncteur 26 restant en position de conjonction.

Cette pression prévaut également dans la partie supérieure des cavités 38 et 40. Tant que cette pression reste inférieure à une première valeur $P_1$, le tiroir de valve 70 reste immobile et le passage 68 reste bloqué.

Le fluide ne peut donc s'écouler en direction du dispositif d'assistance à la direction 22 qu'en empruntant le trajet suivant : étranglement $\sigma_2$, passage 62, étranglement $\sigma_1$, orifice 44 puis conduit 46.

La perte de charge au travers de l'étranglement $\sigma_1$ entraîne un déplacement du tiroir 64, à l'encontre du ressort 66 ce qui provoque un étranglement partiel du passage 62, de section $\sigma_4$ et il en résulte que le tiroir 64 assure le maintien d'un débit constant $Q_1$ au travers du passage 62.

Pour sa part, l'étranglement $\sigma_1$ est tel que la perte de charge résultante de l'écoulement du débit $Q_1$ est insuffisante pour provoquer le déplacement du tiroir 56 à l'encontre du ressort 58. Le passage 50 reste donc masqué et le débit $Q_1$ est acheminé vers le dispositif d'assistance à la direction.

La force maximale d'assistance développée par le dispositif d'assistance à la direction étant, entre autres paramètres, fonction du débit qui le traverse, s'établit alors à une valeur $A_1$.

Lorsque la pression à la sortie de la pompe s'élève au dessus de la pression $P_1$, le tiroir de valve 70 se déplace à l'encontre du ressort 72 en démasquant progressivement le passage 68, dont la section sera designée par $\sigma_5$. Il s'ensuit que le débit global Q qui traverse le passage 62, somme des débits partiels $q_1$ qui traverse l'étranglement $\sigma_2$ et $q_2$ qui traverse les étranglements $\sigma_3$ et $\sigma_5$ augmente progressivement depuis la valeur $Q_1$ précitée jusqu'à une nouvelle valeur $Q_2$ lorsque la pression à l'entrée atteint une nouvelle valeur $P_2$

pour laquelle le tiroir 70 démasque entièrement le passage 68.

Pour sa part, l'étranglement $\sigma_1$, est tel que la perte de charge résultante de l'écoulement du débit $Q_2$ est tout juste suffisante pour provoquer le déplacement du tiroir 56 à l'encontre du ressort 58 jusqu'à la limite du démasquage du passage 50.

Le débit $Q_2$ emprunte l'orifice 44 puis le conduit 46 jusqu'au dispositif d'assistance à la direction 22 dont la force maximale d'assistance atteint une nouvelle valeur $A_2$.

A nouveau, lorsque la pression d'entrée à l'orifice 60 s'élève au delà de la valeur $P_2$, le tiroir de régulateur annexe 64 assure une modulation de l'étranglement $\sigma_4$ pour maintenir le débit dans le passage 62 à la valeur $Q_2$.

Lorsque la charge de l'accumulateur 24 est complète, pour la pression PHmax, le conjoncteur-disjoncteur se déplace vers sa position de disjonction et le débit provenant de la pompe 10 via le conduit 14 est dérivé vers l'orifice 42 du régulateur via le conduit 28.

Dans ces conditions, le tiroir 56 se déplace à l'encontre du ressort 58 en démasquant le passage 50 pour maintenir le débit au travers de l'étranglement $\sigma_1$ sensiblement égal au débit $Q_2$.

Dans ce cas, le débit de fluide qui provient de la pompe via le conduit 16, les étranglements $\sigma_2$, $\sigma_3$, $\sigma_4$, $\sigma_5$ et le passage 62 n'influe pas sur le débit $Q_2$ qui traverse l'étranglement $\sigma_1$ en direction du dispositif 22.

Deux particularités du fonctionnement sont à signaler :

En premier lieu, lorsque le fonctionnement des dispositifs 18 et 20 provoque une baisse de pression dans l'accumulateur au dessous de la valeur PHmin, le conjoncteur-disjoncteur retourne à sa position de conjonction et le conduit 28 est bloqué. L'alimentation du dispositif 22 s'effectue comme indiqué auparavant, le débit étant maintenu à la valeur $Q_2$.

En second lieu, lors du fonctionnement du dispositif d'assistance à la direction 22, il peut se produire une fermeture pratiquement complète du conduit 46. Dans ce cas, la pompe 10 débite dans un circuit entièrement clos et la pression peut alors y atteindre des valeurs importantes.

Pour éviter des risques de détériorations, en particulier du dispositif d'assistance 22, on a prévu le clapet de sécurité 76 qui s'ouvre pour une pression $P_S$, fonction du tarage du ressort 80.

Pour clore cette description, on remarquera que la période de charge de l'accumulateur au démarrage du véhicule est notablement raccourcie en prévoyant, grâce au régulateur selon l'invention, durant toute la période où la pression au refoulement de la pompe 10 reste au dessous de la valeur $P_2$, de n'admettre vers le dispositif d'assistance à la direction 22 qu'un débit réduit $Q_1$, inférieur au débit nominal $Q_2$.

**Revendications**

1. Régulateur de débit pour un circuit hydraulique comprenant un réservoir (12), un générateur de pression (10) dont le conduit de refoulement (14, 16) est connecté, d'une part, à l'entrée d'un conjoncteur-disjoncteur (26) dont une première sortie relie en permanence un dispositif d'assistance à centre fermé comprenant un accumulateur de pression (24) audit générateur de pression et dont une seconde sortie (28) est en communication avec ledit générateur de pression (10) lorsque la pression régnant dans ledit accumulateur (24) est supérieure à une limite basse déterminée, et, d'autre part, à une entrée (60) dudit régulateur de débit (32) dont une sortie (44) est prévue pour être reliée à un dispositif d'assistance à centre ouvert (22), ledit régulateur de débit (32) comprend un boîtier (34) dans lequel sont ménagées :

une première cavité (36), dont une extrémité, dite supérieure, est reliée à ladite seconde sortie (28) dudit conjoncteur-disjoncteur (26) et dont l'autre extrémité, dite inférieure, est reliée à ladite sortie (44) dudit régulateur de débit, comportant un premier passage (50), débouchant dans la paroi de ladite première cavité (36), relié audit réservoir (12), un tiroir principal (56) de régulateur déterminant un premier étranglement $(\sigma_1)$ entre les extrémités de ladite première cavité (36), monté coulissant dans ladite première cavité (36) et un premier ressort (58) repoussant ledit tiroir (56) en éloignement de ladite extrémité inférieure dans une position de repos pour laquelle ledit tiroir (56) masque ledit premier passage (50), les caractéristiques du premier étranglement $(\sigma_1)$, du tiroir principal (56) et du premier ressort (58) étant choisies en vue de maintenir un débit nominal $(Q_2)$ prédéterminé au travers dudit premier étranglement $(\sigma_1)$ ;

une deuxième cavité (38) dont une extrémité, dite supérieure, est reliée à ladite entrée (60) dudit régulateur de débit, comprenant un deuxième passage (62), débouchant dans la paroi de ladite deuxième cavité (38), relié à l'extrémité supérieure de ladite première cavité (36), un tiroir annexe (64) de régulateur déterminant un deuxième étranglement $(\sigma_2)$ entre les extrémités de ladite deuxième cavité (38), monté coulissant dans ladite deuxième cavité (38) et un deuxième ressort (66) repoussant ledit tiroir annexe (64) vers ladite extrémité supérieure dans une position de repos pour laquelle ledit tiroir annexe (64) démasque ledit deuxième passage (62), les caractéristiques du deuxième étranglement $(\sigma_2)$, du tiroir annexe (64) et du deuxième ressort (66) étant choisies en vue de maintenir un débit réduit $(Q_1)$ prédéterminé au travers dudit deuxième étranglement $(\sigma_2)$ ;

une troisième cavité (40), dont une extrémité dite supérieure, est reliée à ladite entrée (60) dudit régulateur de débit et dont l'autre extrémité, dite inférieure, est reliée audit réservoir (12), comprenant un troisième passage (68), débouchant dans la paroi de ladite troisième cavité (40), relié à l'extrémité inférieure de la deuxième cavité (38), un tiroir de valve (70) monté coulissant dans ladite troisième cavité (40) et un ressort de valve (72) repoussant ledit tiroir de valve (70) vers ladite extrémité supérieure dans une position de repos pour laquelle ledit tiroir de valve masque ledit troisième passage (68), un troisième étranglement (σ₃) étant prévu entre ladite extrémité supérieure et ledit tiroir de valve (70).

2. Régulateur selon la revendication 1, caractérisé en ce qu'il comprend en outre un clapet de sécurité (76) mettant en communication ladite extrémité inférieure de ladite première cavité (36) et ledit réservoir (12) lorsque la pression (P$_s$) dans ladite première cavité (36) dépasse un seuil déterminé.

## Claims

1. Flow regulator for a hydraulic circuit comprising a reservoir (12) and a pressure generator (10), the delivery conduit (14, 16) of which is connected, on the one hand, to the inlet of a make-break switch (26), a first outlet of which permanently connects a closed-centre assistance device possessing a pressure accumulator (24) to the said pressure generator and a second outlet (28) of which is in communication with the said pressure generator (10), when the pressure prevailing in the said accumulator (24) is higher than a specific lower limit, and, on the other hand, to an inlet (60) of the said flow regulator (32), one outlet (44) of which is intended to be connected to an open-centre assistance device (22), the said flow regulator (32) comprising a housing (34) in which are formed :

a first cavity (36), of which one end, called the upper end, is connected to the said second outlet (28) of the said make-break switch (26) and of which the other end, called the lower end, is connected to the said outlet (44) of the said flow regulator, having a first passage (50) opening out in the wall of the said first cavity (36) and connected to the said reservoir (12), a main regulator slide (56) defining a first throttle (σ₁) between the ends of the said first cavity (36) and mounted slidably in the said first cavity (36), and a first spring (58) pushing the said slide (56) away from the said lower end into a rest position, in which the said slide (56) masks the said first passage (50), the characteristics of the first throttle (σ₁), of the main slide (56) and of the first spring (58) being selected for the purpose of maintaining a predetermined nominal flow (Q₂) through the said first throttle (σ₁) ;

a second cavity (38), of which one end, called the upper end, is connected to the said inlet (60) of the said flow regulator, having a second passage (62) opening out in the wall of the said second cavity (38) and connected to the upper end of the said first cavity (36), an additional regulator slide (64) defining a second throttle (σ₂) between the ends of the said second cavity (38) and mounted slidably in the said second cavity (38), and a second spring (66) pushing the said additional slide (64) towards the said upper end into a rest position, in which the said additional slide (64) exposes the said second passage (62), the characteristics of the second throttle (σ₂), of the additional slide (64) and of the second spring (66) being selected for the purpose of maintaining a predetermined reduced flow (Q₁) through the said second throttle (σ₂) ;

a third cavity (40), of which one end, called the upper end, is connected to the said inlet (60) of the said flow regulator and of which the other end, called the lower end, is connected to the said reservoir (12), having a third passage (68) opening out in the wall of the said third cavity (40) and connected to the lower end of the second cavity (38), a valve slide (70) mounted slidably in the said third cavity (40), and a valve spring (72) pushing the said valve slide (70) towards the said upper end into a rest position, in which the said valve slide masks the said third passage (68), a third throttle (σ₃) being provided between the said upper end and the said valve slide (70).

2. Regulator according to Claim 1, characterized in that it also possesses a safety valve (76) putting the said lower end of the said first cavity (36) and the said reservoir (12) in communication when the pressure (P$_s$) in the said first cavity (36) exceeds a specific threshold.

## Patentansprüche

1. Durchflußregler für einen hydraulischen Kreis, mit einem Behälter (12), einem Druckgenerator (10), dessen Aulaßleitung (14, 16) einerseits mit dem Eingang eines Verbinders/Unterbrechers (26) verbunden ist, wovon ein erster Ausgang eine Hilfsvorrichtung mit geschlossenem Mittelpunkt, die einen Druckakkumulator (24) umfaßt, mit diesem Druckgenerator dauernd verbindet, und wovon ein zweiter Ausgang (28) mit diesem Druckgenerator (10) in Verbindung steht, wenn der in diesem Akkumulator (24) herrschende Druck größer als ein bestimmter niedriger Grenzwert ist, und andererseits mit einem Eingang (60) dieses Durchflußreglers (32) verbunden ist, wovon ein Ausgang (44) dazu bestimmt ist, mit einer Hilfsvorrichtung mit offenem Mittelpunkt verbunden zu werden, wobei dieser Durchflußregler (32) ein Gehäuse (34) umfaßt, in welchem vorgesehen sind :

ein erster Hohlraum (36), dessen eines, als oberes bezeichnetes Ende mit dem zweiten Ausgang (28) des Verbinders/Unterbrechers (26) und das andere, als unteres bezeichnetes Ende mit dem Ausgang (44) des Durchflußreglers verbunden ist, mit einem ersten Durchgang (50), der in die Wand des ersten Hohlraums (36) mündet und mit dem Behälter (12) verbunden ist, mit einem Hauptschieber (56) des Reglers, der eine erste Drosselstelle (σ₁) zwischen den Enden des ersten Hohlraums (36) bestimmt, der in dem ersten Hohlraum (36) gleitend gelagert ist, sowie mit einer ersten Feder (58), die den Schieber (56) von dem unteren Ende weg in eine Ruhestellung zurückschiebt, in welcher der Schieber (56) den ersten Durchgang (50) abdeckt, wobei die Merkmale der ersten Drosselstelle ($\sigma_1$), des Hauptschiebers (56) sowie der ersten Feder (58) so ausgewählt sind, daß ein vorbestimmter Nenndurchfluß ($Q_2$) durch die erste Drosselstelle ($\sigma_1$) hindurch erhalten bleibt ;

ein zweiter Hohlraum (38), wovon ein, als oberes bezeichnetes Ende mit dem Eingang (60) des Durchflußreglers verbunden ist, die einen zweiten Durchgang (62) umfaßt, welcher in die Wand des zweiten Hohlraums (38) mündet und mit dem oberen Ende des ersten Hohlraums (36) verbunden ist, mit einem Hilfsschieber (64) des Reglers, der eine zweite Drosselstelle ($\sigma_2$) zwischen den Enden des zweiten Hohlraums (38) bestimmt, der in dem zweiten Hohlraum (38) gleitend gelagert ist, und mit einer zweiten Feder (66), die den Hilfsschieber (64) zu dem oberen Ende hin in eine Ruhestellung zurückschiebt, in welcher der Hilfsschieber (64) den zweiten Durchgang (62) freilegt, wobei die Merkmale der zweiten Drosselstelle ($\sigma_2$), des Hilfsschiebers (64) und der zweiten Feder (66) so ausgewählt sind, daß ein vorbestimmter, verringerter Durchfluß (Q1) durch die zweite Drosselstelle ($\sigma_2$) hindurch erhalten bleibt ;

ein dritter Hohlraum (40), wovon ein als oberes bezeichnetes Ende mit dem Eingang (60) des Durchflußreglers verbunden ist und wovon das andere als unteres bezeichnetes Ende mit dem Behälter (12) verbunden ist, mit einem dritten Durchgang (68), der in die Wand des dritten Hohlraums (40) mündet und mit dem unteren Ende des zweiten Hohlraums (38) verbunden ist, mit einem Ventilschieber (70), der in dem dritten Hohlraum (40) gleitend gelagert ist, und mit einer Ventilfeder (72), welche den Ventilschieber (70) zu dem oberen Ende hin in eine Ruhestellung zurückschiebt, in welcher der Ventilschieber den dritten Durchgang (68) abdeckt, wobei eine dritte Drosselstelle ($\sigma_3$) zwischen dem oberen Ende und dem Ventilschieber (70) vorgesehen ist.

2. Regler nach Anspruch 1, dadurch gekennzeichnet, daß er ferner ein Sicherheitsventil (76) umfaßt, das das untere Ende des ersten Hohlraums (36) mit dem Behälter (12) in Verbindung bringt, wenn der Druck ($P_s$) in dem ersten Hohlraum (36) eine bestimmte Schwelle überschreitet.

EP 0 091 348 B1